Europäisches Patentamt

European Patent Office

Office européen des brevets

(11) Publication number: **0 246 738**
A1

(12) **EUROPEAN PATENT APPLICATION**

(21) Application number: **87302421.0**

(22) Date of filing: **20.03.87**

(51) Int. Cl.³: **G 01 F 23/28**

(30) Priority: **21.03.86 GB 8607111**

(43) Date of publication of application:
**25.11.87 Bulletin 87/48**

(84) Designated Contracting States:
**AT BE CH DE ES FR GB GR IT LI LU NL SE**

(71) Applicant: **Procontech Limited**
**12 Cross Street**
**Preston Lancashire PR1 3NH(GB)**

(72) Inventor: **Warburton, David**
**The ConifersWinster Drive**
**BreightmetBolton BL2 5HA(GB)**

(74) Representative: **Sherrard-Smith, Hugh et al,**
**Appleyard, Lees & Co. 15 Clare Road**
**Halifax, HX1 2HY West Yorkshire(GB)**

(54) **Liquid level sensing.**

(57) A level sensor (112) emits a signal from a sonic emitter (114). When the signal reaches the end of an outwardly diverging metal cone 130 it disturbs the air located over the end of a dividing wall (132) of the cone, and a receiver (116) recognises that disturbance. The time taken between the signal being omitted and received over the fixed distance is used to give an indication of the speed of sound in the environment. The emitter (114) then emits a further signal which is reflected back off the surface of a liquid to the receiver (116), and the time taken for that further signal to be emitted and received is adjusted in accordance with the time taken for the previous signal to travel the fixed distance in order to give an accurate indication of the liquid level.

FIG.2.

-1-

## LIQUID LEVEL SENSING.

The present invention relates to a liquid level sensor and to a method of sensing the level of a liquid and is particularly, although not exclusively applicable to the sensing of the level of liquid such as petrol in a storage tank.

A previous proposal for sensing the level of petrol in a storage tank has included a sensor comprising a sonic emitter and receiver located adjacent to each other above the level of petrol. The emitter sends a sonic signal towards the surface of the petrol which is reflected from the surface back to the emitter. The time delay between the signal being emitted and received gives an indication of the distance of the surface of the liquid from the top of the tank, and from that reading an estimate of the amount of petrol in the tank can be arrived at. However, the prior devices are very inaccurate, particularly when attempting to read the level of an almost full tank. That inaccuracy derives at least in part from the variation of the speed of sound due to temperature changes and the composition of the gas which the signal has to pass through between the emitter and the receiver. That inaccuracy may amount to a reading being 15% out from the correct one.

According to one aspect of the present invention in a liquid level sensor including an emitter and a receiver, the receiver is arranged to recognise a signal from the emitter after the signal has been recognised from a fixed distance or from the surface of a liquid. With such a sensor, as the fixed distance is known, the time taken for the signal to pass that distance can be used in the calculation or obtaining of a fairly precise reading of how far the level of the liquid is from the sensor, and accordingly how much liquid is present, that reading being compensated for despite possible variations in the temperature and environment which the signal has to pass through which may alter the speed of the signal. The accuracy of the sensing may be within 0.01% of the actual reading or in the region of, or less than 2% of the actual reading.

The fixed distance from which the signal may be recognised may extend between the emitter and the surface of the liquid. The sensor may include means for determining when a signal has been recognised from the fixed distance or the surface of the liquid, and said means may comprise being able to determine when the signal has first been recognised from the fixed distance or the surface of the liquid, and said means may comprise being able to determine when the signal has first been recognised from the fixed distance or has subsequently been recognised from the surface of the liquid.

The fixed distance over which the signal may be recognised may be arranged to be provided by a reflector from which the signal may be reflected. The reflector may be afforded by a nylon or metal member. Alternatively, the fixed distance may be comprised by the emitter receiving a signal resulting from gas being disturbed, or interference being induced in the gas at a fixed location.

The liquid level sensor may be included in a system arranged to increase the level of liquid when the sensed level reaches, or falls below a predetermined amount.

-3-

According to a further aspect of the present invention, a method of sensing the level of a liquid comprises emitting a signal from an emitter and recognising that signal from a fixed distance by a receiver, and receiving a signal by the receiver from the emitter which has been reflected from the surface of the liquid, the time taken for the signal to be recognised as having passed the fixed distance being used to derive an indication of the level of the surface of the liquid as a result of the time taken for the signal to be reflected back from the surface of the liquid.

The method may comprise first emitting a signal from the emitter which is recognised from a fixed distance by the receiver, and subsequently emitting a signal from the emitter which is received by the receiver having been reflected from the surface of the liquid.

The method may comprise continuously or repeatedly sensing the level of the liquid. The level may be sensed at regular or irregular intervals, or on demand.

The invention may be put into practice in various ways, but two embodiments will now be described by way of example and with reference to the accompanying drawings, in which:-

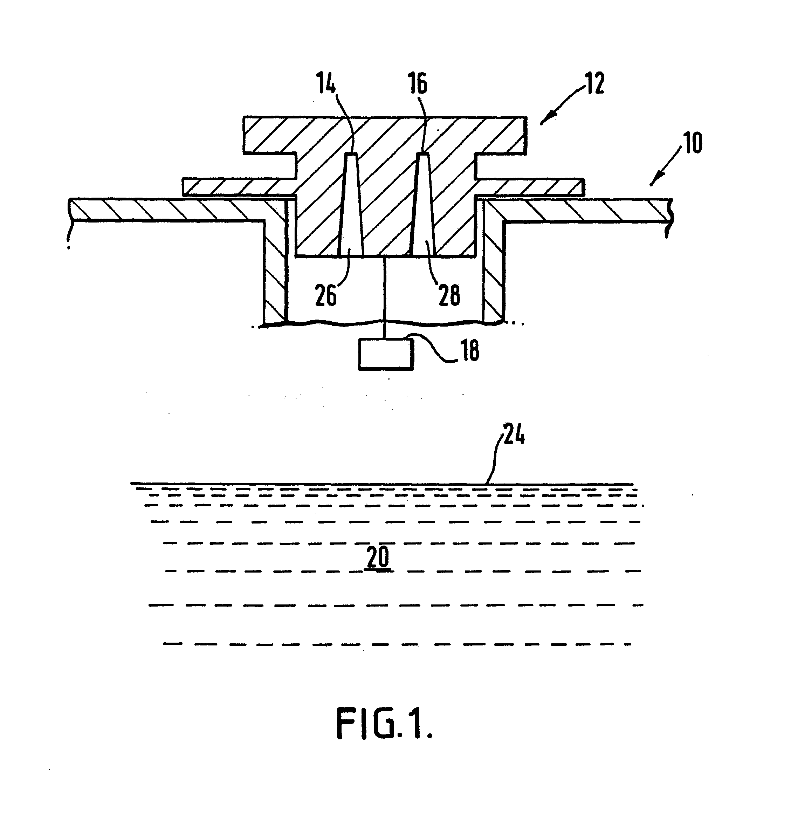

Figure 1 is a schematic sectional view of part of a petrol storage tank 10 including a first embodiment of a level sensor 12, and

Figure 2 is a sectional view of a second embodiment of a level sensor 112.

The sensor includes a sonic emitter 14, a receiver 16 and a reflector 18 located beneath and between the emitter and sensor. The liquid 20 is located in the tank and the surface is indicated at 24. The reflector may comprise or include a nylon or metal member surface from which the sound is reflected.

In use, on each occasion that the level is to be read, the emitter sends a sonic signal out of an outwardly diverging passage 26 which is reflected by the reflector 18 through an inwardly converging passage 28 to the emitter. As the distance which that signal passes is fixed, the time taken for that signal to pass that distance is used to give an indication of the speed of sound in the tank for the ambient temperature and gas properties. A further signal is then emitted and reflected to the receiver from the surface of the liquid, and the time taken for that signal to leave the emitter and reach the receiver is used to give an indication of the level of the liquid in the tank. The receipt of that further signal from the reflector prior to receipt of the reflected signal from the surface is ignored.

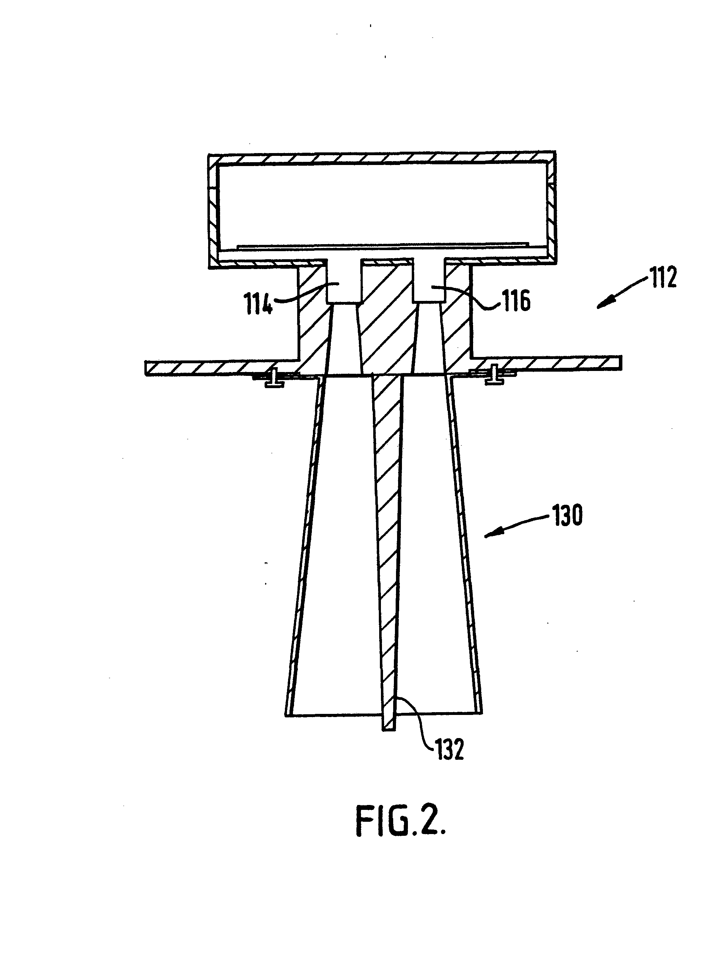

In Figure 2, the level sensor 112 includes a sonic emitter 114, a receiver 116, and a downwardly and outwardly diverging metal cone 130 of 200mm length including a downwardly tapering dividing wall 132 of 5mm width separating the emitter from the receiver throughout the extent of the cone. The level sensor 112 is arranged to be mounted in the top wall of a tank with the cone being directed towards the liquid contained therein.

In use, a signal is given from the emitter which travels down the cone on one side of the dividing wall 132. When the signal reaches the open end of the cone it

disturbs the normally still air in the tank, and that disturbance of the air, or interference, disturbs the air over the open end of the cone leading to the receiver 116. That disturbance is picked up by the receiver. Given that the distance from the emitter to the receiver is fixed and known, the time taken between a signal being emitted and one being received can be used to give a calibration reading for the speed of sound in the tank under the conditions in the tank at that time.

The emitter then gives a subsequent signal which is reflected off the surface of the liquid and returned to the receiver (the initial signal returned to the emitter as a result of the disturbance or interference at the end of the cone is ignored). The time taken for the reflected signal to reach the receiver from the emitter can then be corrected in accordance with the time taken for the previous signal to travel the fixed distance in order to give an accurate indication of the level of the liquid.

As a result of the "test" signal to the reflector occurring prior to a signal being reflected from the surface, extremely accurate readings relevant to the level of the liquid are able to be given, by use of the then known calibration of the probe or cone reflected upon the distance indicated from the surface reflector even where the tank is full and the distance through which the reflected signal from the surface has to travel is extremely small. In fact, accuracy of 0.01% or in the region of 2% or less is possible.

Either of the sensors may be connected to a control unit which may be some distance from the tank. In Figure 2, part of the control unit is shown, and

-6-

includes a printed circuit board 134 located within a housing 136. The control unit may be able to calculate the amount of fuel in the tank once it knows the type of tank, such as rectangular, square, cylindrical (horizontal or vertical), spherical or graphic. Graphic tanks are described herein as being those whose shapes are not symmetrical and whose volume may have to be calculated in, for instance, 100 graduations of level, with approximate readings being given for level readings coming between the graduations.

The reading for the level of liquid in the tank may be in a volume, level or weight output.

The control unit may include timing means which can read the level at regular or predetermined times, this feature being particularly useful where the sensor is mounted in the storage tank of a petrol station where it may be used to record the level at the end of each day. Alternatively the level can be read on demand.

Reading means may be provided to record any information referred to herein.

The control unit may be arranged to record or indicate when the level reaches a predetermined high or low level, in which case means may be provided to shut off the supply of liquid to the tank or to add further liquid. The control unit may also be arranged to note and record when the level falls such that a predetermined volume of liquid, for instance 2 gallons, has left the tank, and to note when subsequent falls in the level are occurring. This feature is particularly useful to sense when the tank is leaking (in which case regular falls in the level will be recorded), or when an unattended tank

-7-

is being pilfered, (In which case the falls will be irregular).

The control unit may be arranged to cooperate with a plurality of level sensors located in different tanks, and may be able to perform any of the functions therein described in relation to all of the levels in those tanks automatically or sequentially or on demand.

-8-

## CLAIMS

1.      A liquid level sensor including an emitter and a receiver, the receiver being arranged to recognise a signal from the emitter from a fixed distance or from the surface of a liquid.

2.      A sensor as claimed in Claim 1 in which the fixed distance from which the signal may be recognised extends between the emitter and the surface of the liquid.

3.      A sensor as claimed in Claim 1 or Claim 2 in which the sensor includes means for determining when a recognised signal has been received from the fixed distance or the surface of the liquid.

4.      A sensor as claimed in any of Claims 1 to 3 in which the signal is arranged to be recognised from the fixed distance by being reflected from a reflector.

5.      A sensor as claimed in Claim 4 in which the reflector includes a nylon surface.

6.      A sensor as claimed in Claim 4 in which the reflector includes a metal surface.

7.      A sensor as claimed in any of Claims 1 to 3 in which the fixed distance is arranged to be comprised by the emitter receiving a signal from gas being disturbed, or interference being induced in gas, at a fixed location.

8. A sensor as claimed in any preceding claim incorporated in a system arranged to increase the level of liquid when the sensed level reaches, or falls below a predetermined amount.

9. A method of sensing a level of a liquid comprising emitting a signal from an emitter, and recognising that signal from a fixed distance by a receiver, and receiving a signal by the receiver from the emitter which has been reflected from the surface of the liquid, the time taken for the signal to be recognised from the fixed distance being used to derive an indication of the level of the surface of the liquid as a result of the time taken for the signal to be reflected back from the surface of the liquid.

10. A method as claimed in Claim 9 comprising first emitting a signal from the emitter which is recognised by the receiver from the fixed distance, and subsequently emitting a signal from the receiver which is received by the receiver having been reflected from the surface of the liquid.

11. A method as claimed in Claim 9 or 10 comprising recognising a signal from the fixed distance by causing disturbance of or inducing interference in gas at a fixed location.

12. A method as claimed in any of Claims 9 to 11 comprising continuously sensing the level of the liquid.

13. A method as claimed in any of Claims 9 to 11 comprising repeatedly sensing the level of the liquid.

-10-

14.     A method as claimed in Claim 13 comprising sensing the level of the liquid at regular intervals.

15.     A method as claimed in any of Claims 9 to 11 comprising sensing the level at irregular intervals.

16.     A method as claimed in any of Claims 9 to 11 comprising sensing the level on demand.

17.     A method of sensing the level of a liquid as claimed in any of Claims 9 to 16 when using a liquid level sensor as claimed in any of Claims 1 to 9.

0246738

FIG.1.

FIG.2.

## European Patent Office

### EUROPEAN SEARCH REPORT

| DOCUMENTS CONSIDERED TO BE RELEVANT | | | EP 87302421.0 |
|---|---|---|---|

| Category | Citation of document with indication, where appropriate, of relevant passages | Relevant to claim | CLASSIFICATION OF THE APPLICATION (Int Cl 4) |
|---|---|---|---|
| X | AT - B - 367 545 (ZÜLIG AG) <br> * Page 5, line 40 - page 7, line 11; fig. 1,2; page 8, line 52 - page 11, line 27 * | 1-3,8-10,12,13,17 | G 01 F 23/28 |
| Y | | 5,6 | |
| A | | 14-16 | |
| | -- | | |
| X | DE - B2 - 2 444 222 (OTT) <br> * Fig. 1; column 8, lines 27-44 * | 1-4,8-10,12-17 | |
| Y | | 5,6 | |
| | -- | | |
| X | US - A - 4 470 299 (SOLTZ) <br> * Fig. 1,3 * | 1-4,8-10,17 | |
| Y | | 5,6 | TECHNICAL FIELDS SEARCHED (Int Cl 4) |
| A | | 12-16 | |
| | -- | | |
| Y | US - A - 4 130 018 (ADAMS et al.) <br> * Fig. 1; column 4, lines 1-3 * | 5 | G 01 F 23/00 <br> G 01 N 29/00 |
| | -- | | |
| Y | DE - B - 1 498 291 (THE BRITISH PETROLEUM) <br> * Fig. 1 * | 6 | |
| | -- | | |
| A | DE - B - 1 648 361 (BRANSON INSTRUMENTS) <br> * Fig. 1,2 * | 7,11 | |
| | -- | | |

The present search report has been drawn up for all claims

| Place of search | Date of completion of the search | Examiner |
|---|---|---|
| VIENNA | 23-06-1987 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| | DOCUMENTS CONSIDERED TO BE RELEVANT | | EP 87302421.0 |

| Category | Citation of document with indication, where appropriate, of relevant passages | Relevant to claim | CLASSIFICATION OF THE APPLICATION (Int. Cl.4) |
|---|---|---|---|
| A | <u>US - A - 4 264 788</u> (KEIDEL et al.) <br> * Fig. 1,2 * <br> ---- | 1,7,9, 11,12 | |
| | | | **TECHNICAL FIELDS SEARCHED (Int. Cl.4)** |
| | The present search report has been drawn up for all claims | | |

| Place of search | Date of completion of the search | Examiner |
|---|---|---|
| VIENNA | 23-06-1987 | GRONAU |